(19) **Europäisches Patentamt**
**European Patent Office**
**Office européen des brevets**

(11) **EP 3 587 678 B1**

(12) **EUROPEAN PATENT SPECIFICATION**

(45) Date of publication and mention of the grant of the patent:
**17.03.2021 Bulletin 2021/11**

(21) Application number: **19181343.5**

(22) Date of filing: **19.06.2019**

(51) Int Cl.:
*E03B 1/02* *(2006.01)*     *E03B 3/02* *(2006.01)*
*E03B 3/11* *(2006.01)*     *E03B 11/10* *(2006.01)*
*E03B 11/14* *(2006.01)*     *C02F 9/00* *(2006.01)*
*E03B 1/04* *(2006.01)*     *C02F 1/00* *(2006.01)*
*C02F 1/44* *(2006.01)*     *C02F 1/28* *(2006.01)*
*C02F 1/76* *(2006.01)*     *C02F 1/78* *(2006.01)*
*C02F 103/00* *(2006.01)*     *C02F 103/08* *(2006.01)*

(54) **WATER SUPPLY MANAGEMENT SYSTEM AND METHOD AND COMPUTER-READABLE RECORDING MEDIUM INCLUDING INSTRUCTON FOR PERFORMING THE METHOD**

WASSERVERSORGUNGSVERWALTUNGSSYSTEM UND VERFAHREN UND COMPUTERLESBARES AUFZEICHNUNGSMEDIUM MIT ANWEISUNG ZUR DURCHFÜHRUNG DES VERFAHRENS

SYSTÈME ET PROCÉDÉ DE GESTION DE L'ALIMENTATION EN EAU ET SUPPORT D'ENREGISTREMENT LISIBLE PAR ORDINATEUR COMPRENANT UNE INSTRUCTION POUR METTRE EN UVRE LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2018 KR 20180073141**

(43) Date of publication of application:
**01.01.2020 Bulletin 2020/01**

(73) Proprietor: **Korea University Research and Business Foundation**
**Seoul (KR)**

(72) Inventors:
• **Hong, Seungkwan**
**Gyeonggi-do (KR)**
• **Kim, Jungbin**
**Seoul (KR)**

(74) Representative: **RGTH**
**Patentanwälte PartGmbB**
**Neuer Wall 10**
**20354 Hamburg (DE)**

(56) References cited:
EP-A1- 2 990 545     WO-A1-03/040480
FR-A1- 2 912 161     GB-A- 2 417 047

**Description**

FIELD OF THE INVENTION

Embodiments of the inventive concept described herein relate to a water supply management system and method and a computer-readable recording medium including instructions for performing the method.

BACKGROUND

The importance of water resources has been emphasized all over the world. Most of water resources of our country depend on rivers, and the amount of rainfall has an influence on environments and water qualities of the rivers.

In recent years, due to climate change, areas prone to floods according to regional torrential rains have been expanded, or water shortages have been caused by repeated droughts.

That is, the quantities and qualities of water resources are changing every year due to changing external environments, and therefore managing water through existing water supply management systems is becoming more difficult. For example, in case of drought, it is difficult to ensure drinking water resources through existing water treatment facilities due to lack of water entering water supply sources, and in case of flood, downtown areas are often flooded, and rivers overflow frequently.

Accordingly, a new water supply management system for reducing damage due to climate change is required. For example, FR 2 912 161 A1 relates to a hydraulic station for collecting, managing and distributing rain water. However, FR 2 912 161 A1 fails to disclose the claimed characterizing features of the present application.

SUMMARY

Embodiments of the inventive concept provide a water supply management system and method for preparing for drought and flood by connecting an underground water tank, a desalination facility, and a rainwater pipe with an existing water purification facility, and a computer-readable recording medium including instructions for performing the method.

The technical problems to be solved by the inventive concept are not limited to the aforementioned problems, and any other technical problems not mentioned herein will be clearly understood from the following description by those skilled in the art to which the inventive concept pertains.

According to an exemplary embodiment, a water supply management system 1000 includes a first water storage tank 100, a second water storage tank 200, a water treatment device 300, and a controller 600 that controls opening or closing of inflow pipes and drain pipes connected to the first water storage tank 100, the second water storage tank 200, and the water treatment device 300. The first water storage tank 100 stores first stored water, and at least one of rainwater 30 and seawater 10 overflowing in case of flood is introduced into the first water storage tank 100 to form the first stored water. The second water storage tank 200 stores second stored water, and at least one of freshwater 20 in a water supply source and the first stored water in the first water storage tank 100 is introduced into the second water storage tank 200 to form the second stored water. The water treatment device 300 purifies the second stored water released from the second water storage tank 200 and releases potable water. The controller 600 controls inflow rates and outflow rates of the rainwater 30, the seawater 10, the freshwater 20, the first stored water, the second stored water, and the potable water.

The first water storage tank 100 may include a rainwater inflow pipe 33 through which the rainwater 30 is introduced into the first storage tank 100, a first stored water inflow pipe 40 through which the first stored water is introduced into the second water storage tank 200, seawater inflow pipes 60 and 62 through which the seawater 10 is introduced into the first water storage tank 100, and a first stored water drain pipe 50 through which the first stored water is released to the sea.

The controller 600 may control valves 32, 42, 61, and 51 disposed in the rainwater inflow pipe 33, the first stored water inflow pipe 40, the seawater inflow pipes 60 and 62, and the first stored water drain pipe 50, respectively, and the controller 600 may control pumps 41 and 52 disposed on the first stored water inflow pipe 40 and the first stored water drain pipe 50, respectively.

The controller 600 may determine a normal situation, a drought situation, or a flood situation, based on a water level of the water supply source. In the normal situation, the controller 600 may close the rainwater inflow pipe 33, the first stored water inflow pipe 40, the seawater inflow pipes 60 and 62, and the first stored water drain pipe 50. In the drought situation, the controller 600 may open the seawater inflow pipes 60 and 62 and the first stored water inflow pipe 40 and may close the first stored water drain pipe 50. In the flood situation, the controller 600 may open the rainwater inflow pipe 33, and the controller 600 may open the first stored water drain pipe 50 when a water level of the first stored water in the first water storage tank 100 is higher than or equal to a preset value.

A foreign material removal device 70 may be disposed in the seawater inflow pipes 60 and 62 to remove foreign matter contained in the seawater 10. The removed foreign matter may be discharged to the sea through the first stored water drain pipe 50.

The foreign material removal device 70 may include a housing 70a including a seawater inlet 70b, a seawater outlet 70c, and a foreign matter outlet 70d, blades 71 and 74 that stir and break foreign matter in the seawater 10 introduced from the sea, a mesh screen 72 that filters foreign matter floating in the housing 70a, and scrapers 73 and 76 that scrape foreign matter off the mesh screen 72 and a sidewall of the housing 70a.

The water treatment device 300 may include a pre-treatment device 400 that includes a coagulation means 420, a sedimentation means 430, and a filtration means 440 and that controls water quality of the second stored water, and a desalination device 500 that is disposed downstream of the pre-treatment device 400 and that removes dissolved matter containing salt from part of the second stored water and releases produced water.

The pre-treatment device 400 may further include an ozone treatment means 460 and an activated carbon treatment means 470.

The desalination device 500 may include a nanofiltration means 510 and a reverse osmosis means 520.

The desalination device 500 may be combinable with or detachable from the pre-treatment device 400. The controller 600 may combine the desalination device 500 with the pre-treatment device 400 in the drought situation, and the controller 600 may detach the desalination device 500 from the pre-treatment device 400 in the normal situation.

The controller 600 may determine the drought situation when a current water level A of the water supply source is lower than a first water level B, may set a target outflow rate of the potable water and a target salinity of the potable water, may open the first stored water inflow pipe 40 to introduce the first stored water in the first water storage tank 100 into the second water storage tank 200, may determine an inflow rate of the first stored water and an inflow rate of the freshwater 20 based on the current water level A of the water supply source, may measure salinities of the freshwater 20 and the first stored water, may calculate a salinity of the second stored water that is stored in the second water storage tank 200, determine an inflow ratio of the second stored water introduced into the desalination device 500 to the second stored water subjected to a pre-treatment process in the pre-treatment device 400, through first calculation, may reflect desalination performance of the desalination device 500 to determine an outflow rate and a salinity of the produced water released from the desalination device 500, through second calculation, may determine a final outflow rate and a final salinity of the potable water released from the water treatment device 300, through third calculation, may compare the target outflow rate of the potable water and the final outflow rate of the potable water, may adjust the inflow rate of the first stored water, may compare the target salinity of the potable water and the final salinity of the potable water, and may adjust the inflow ratio of the second stored water introduced into the desalination device 500.

According to an exemplary embodiment, a water supply management method includes a step of obtaining, by the controller 600, a current water level of a water supply source and determining a drought situation, a normal situation, and a flood situation based on the current water level of the water supply source (S10), a step of adjusting, by the controller 600, an inflow rate of freshwater 20 from the water supply source and an inflow rate of first stored water from the first water storage tank 100 and introducing the freshwater 20 and the first stored water into the second water storage tank 200, when the controller 600 determines the drought situation, a step of closing, by the controller 600, the rainwater inflow pipe 33, the first stored water inflow pipe 40, the seawater inflow pipes 60 and 62, and the first stored water drain pipe 50, when the controller 600 determines the normal situation (S110), and a step of opening, by the controller 600, the rainwater inflow pipe 33 when the controller 600 determines the flood situation, and opening the first stored water drain pipe 50 when a water level of the first stored water in the first water storage tank 100 is higher than or equal to a preset value (S210).

The step of introducing the freshwater 20 and the first stored water into the second water storage tank 200 may include a step of setting, by the controller 600, a target outflow rate of potable water and a target salinity of the potable water (S20), a step of opening, by the controller 600, the first stored water inflow pipe 40 to introduce the first stored water in the first water storage tank 100 into the second water storage tank 200 and determining an inflow rate of the first stored water and an inflow rate of the freshwater 20 based on the current water level of the water supply source (S30), a step of calculating, by the controller 600, a salinity of second stored water that is stored in the second water storage tank 200 (S40), a step of determining, by the controller 600, an inflow ratio of the second stored water introduced into the desalination device 500 to the second stored water subjected to a pre-treatment process in the pre-treatment device 400, through first calculation (S50), a step of reflecting, by the controller 600, desalination performance of the desalination device 500 and determining an outflow rate and a salinity of produced water released from the desalination device 500, through second calculation (S60), a step of determining, by the controller 600, a final outflow rate and a final salinity of the potable water released from the water treatment device 300, through third calculation (S70), a step of comparing, by the controller 600, the target outflow rate of the potable water and the final outflow rate of the potable water and adjusting the inflow rate of the first stored water (S80), and a step of comparing, by the controller 600, the target salinity of the potable water and the final salinity of the potable water and adjusting the inflow ratio of the second stored water introduced into the desalination device 500 (S90).

In the step of comparing, by the controller 600, the target outflow rate of the potable water and the final outflow rate of the potable water and adjusting the inflow rate of the first stored water (S80), the controller 600 may decrease the inflow rate of the first stored water from the first water storage tank 100 when the final outflow rate of the potable water is higher than the target outflow rate of the potable water, and the controller 600 may increase the inflow rate of the first stored water from the first water storage tank 100 when the final outflow rate of the potable water is lower than the target outflow rate of the potable water. In the step of comparing, by the controller 600, the target salinity of the potable water and the final salinity of the potable water and adjusting the inflow ratio of the second stored water introduced into the desalination device 500 (S90), the controller 600 may determine that the final outflow rate of the potable water is within a set target range, compared with the target outflow rate of the potable water, after which the controller 600 may further increase the inflow ratio of the second stored water introduced into the desalination device 500 when the final salinity of the potable water is much higher than the target salinity of the potable water and the controller 600 may decrease the inflow ratio of the second stored water introduced into the desalination device 500 when the final salinity of the potable water is much lower than the target salinity of the potable water.

BRIEF DESCRIPTION OF THE FIGURES

The above and other objects and features will become apparent from the following description with reference to the following figures, wherein like reference numerals refer to like parts throughout the various figures unless otherwise specified, and wherein:

FIG. 1 is a schematic view illustrating a configuration of a water supply management system according to an embodiment of the inventive concept;
FIG. 2 is a schematic view illustrating a configuration of a foreign material removal device of FIG. 1;
FIG. 3 is a schematic view illustrating a configuration of a water treatment device of FIG. 1;
FIG. 4 is a schematic view illustrating a configuration of a desalination device of FIG. 3;
FIG. 5 is a flowchart illustrating a process of calculating the outflow rate and salinity of produced water by reflecting desalination performance of the desalination device; and
FIG. 6A and FIG. 6B is a flowchart illustrating a water supply management method according to an embodiment of the inventive concept.

DETAILED DESCRIPTION

Hereinafter, embodiments of the inventive concept will be described in more detail with reference to the accompanying drawings. The inventive concept may, however, be embodied in different forms and should not be constructed as limited to the embodiments set forth herein. Rather, these embodiments are provided so that the inventive concept will be thorough and complete, and will fully convey the scope of the inventive concept to those skilled in the art. In the drawings, the dimensions of components are exaggerated for clarity of illustration.

In order to clarify the solutions of the inventive concept to the problems, the configuration of the inventive concept will be described in detail with reference to the accompanying drawings, based on the embodiments of the inventive concept. In adding the reference numerals to the components of each drawing, it should be noted that the identical or equivalent component is designated by the identical numeral even when they are displayed on other drawings, and when any drawing is explained, a component depicted in another drawing may be recited, if necessary.

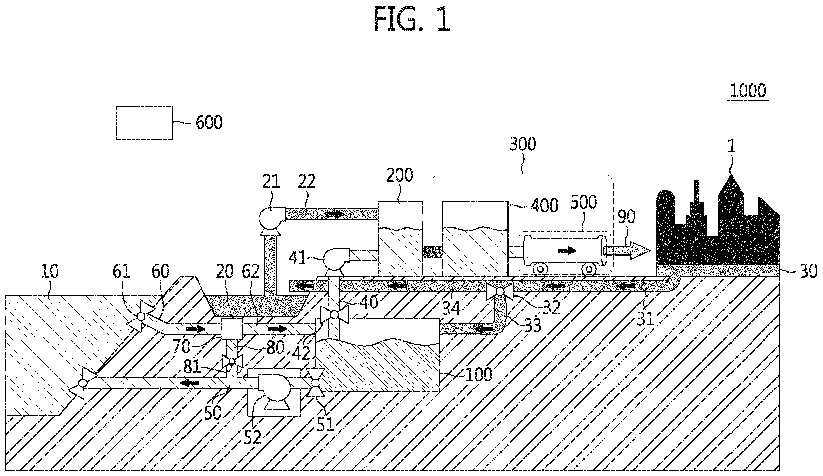

Hereinafter, a water supply management system according to an embodiment of the inventive concept will be described with reference to FIGS. 1 to 5.

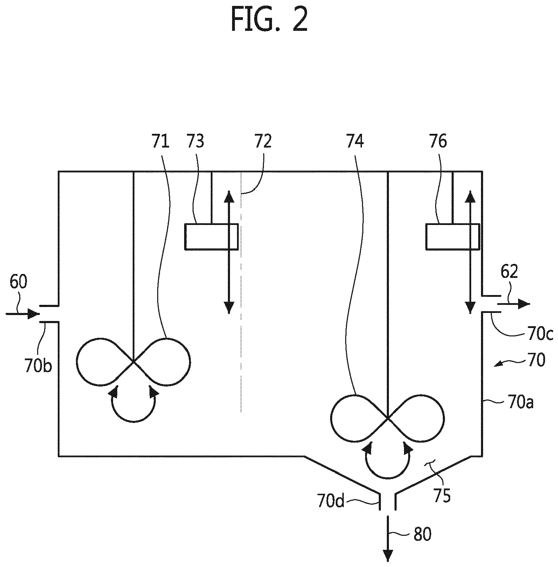

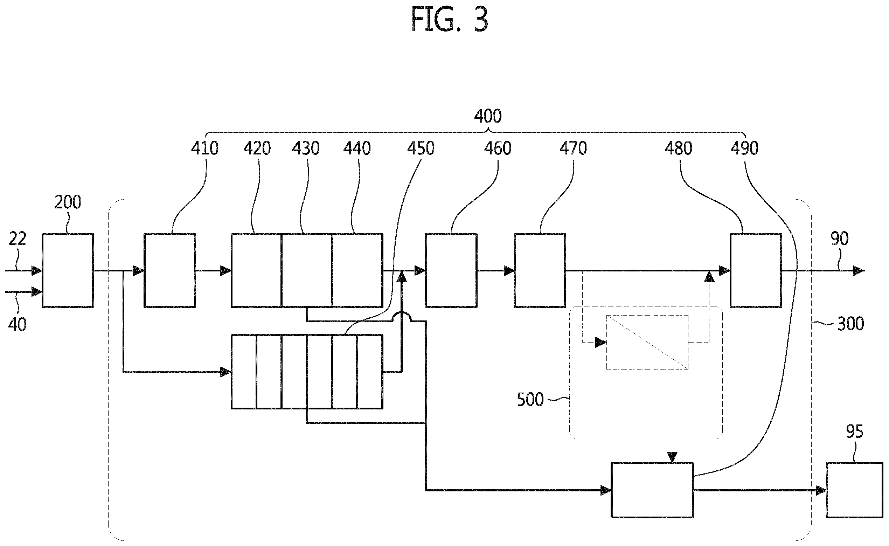

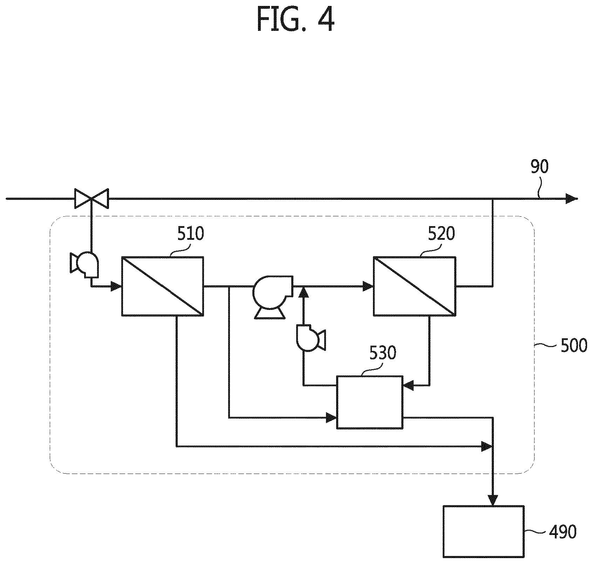

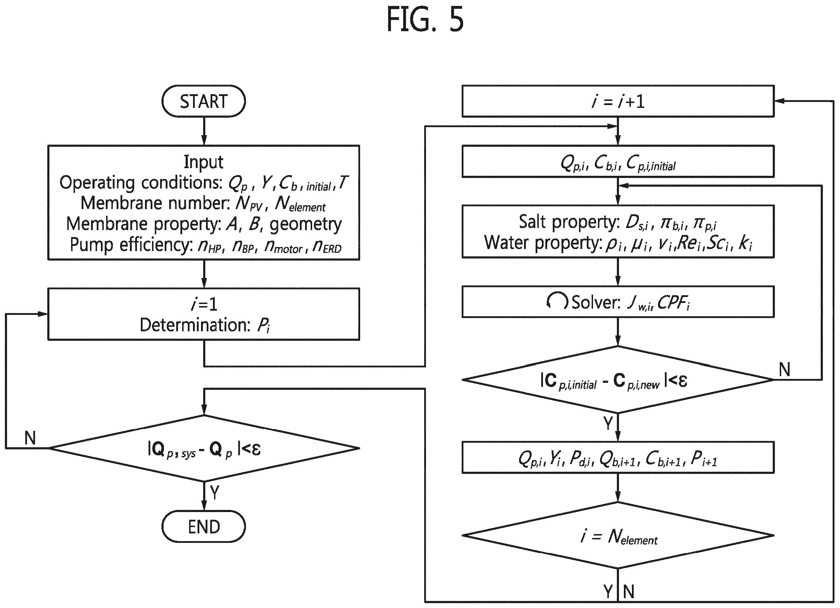

FIG. 1 is a schematic view illustrating a configuration of the water supply management system according to the embodiment of the inventive concept. FIG. 2 is a schematic view illustrating a configuration of a foreign material removal device of FIG. 1. FIG. 3 is a schematic view illustrating a configuration of a water treatment device of FIG. 1. FIG. 4 is a schematic view illustrating a configuration of a desalination device of FIG. 3. FIG. 5 is a flowchart illustrating a process of calculating the outflow rate and salinity of produced water by reflecting desalination performance of the desalination device.

Referring to FIG. 1, the water supply management system 1000 according to the embodiment of the inventive concept includes a first water storage tank 100, a second water storage tank 200, the water treatment device 300, and a controller 600.

The first water storage tank 100 may store first stored water in which seawater 10 and rainwater 30 are mixed. The first water storage tank 100 may preferably be disposed in a lower position than the level of the seawater 10 to allow the seawater 10 to be easily introduced into the first water storage tank 100.

A rainwater inflow pipe 33 may be connected to one side of the first water storage tank 100, and the rainwater 30 that overflows in case of flood in a city 1 may be introduced into the first water storage tank 100 through the rainwater inflow pipe 33. A first stored water drain pipe 50 and seawater inflow pipes 60 and 62 may be connected to an opposite side of the first water storage tank 100. The first stored water may be released to the sea through the first stored water drain pipe 50, and the seawater 10 may be introduced into the first water storage tank 100 through the seawater inflow pipes 60 and 62. A first stored water inflow pipe 40 may be connected to the top side of the first water storage tank 100, and the first stored water may be introduced into the second water storage tank 200 from the first water storage tank 100 through the first stored water inflow pipe 40.

Pumps 52 and 41 for delivering the first stored water may be disposed on the first stored water drain pipe 50 and the first stored water inflow pipe 40, respectively.

Valves 32, 42, 51, and 61 may be disposed in the rainwater inflow pipe 33, the first stored water inflow pipe 40, the first stored water drain pipe 50, and the seawater inflow pipes 60 and 62, respectively. The valve 32 may control the inflow rate of the rainwater 30, the valves 42 and 51 may control the inflow rate or the outflow rate of the first stored water, and the valve 61 may control the inflow rate of the seawater 10.

The controller 600 may control the valves 32, 42, 51, and 61 to open or close the rainwater inflow pipe 33, the first stored water drain pipe 50, the first stored water inflow pipe 40, and the seawater inflow pipe 60, respectively.

Meanwhile, the rainwater 30 that overflows in case of flood in the city 1 may be introduced into a water supply source along a rainwater pipe 31, and when the rainwater inlet valve 32 is opened under the control of the controller 600, the rainwater 30 may be introduced into the first water storage tank 100 through the rainwater inflow pipe 33. Here, the rainwater 30 not introduced into the rainwater inflow pipe 33 may be drained through a rainwater drain pipe 34 and mixed with freshwater 20.

Although not illustrated, foreign matter in the introduced rainwater 30 may preferably be removed through a separate filter.

Furthermore, the foreign material removal device 70 for removing foreign matter contained in the introduced seawater 10 may be included in the seawater inflow pipes 60 and 62.

Referring to FIG. 2, the foreign material removal device 70 may include a housing 70a, blades 71 and 74, a mesh screen 72, and scrapers 73 and 76.

The housing 70a may include a seawater inlet 70b through which the seawater 10 is introduced into the housing 70a, a seawater outlet 70c through which the seawater 10 is drained from the housing 70a, a foreign matter outlet 70d, and sidewalls for storing the seawater 10.

The blades 71 and 74 may be disposed in the housing 70a so as to be adjacent to the seawater inlet 70b and the foreign matter outlet 70d, respectively.

The blades 71 and 74 with an edge may rotate to break foreign matter such as a jellyfish floating in the seawater 10 and may repeatedly operate and stop to generate a vortex in the seawater 10, thereby enabling fragments of the broken foreign matter to be easily discharged through the foreign matter outlet 70d.

The foreign matter outlet 70d may include a funnel-shaped space 75 having a predetermined slope and may guide a discharge path of the foreign matter that is discharged.

The mesh screen 72 may have a mesh shape. The mesh screen 72 may allow the seawater 10 to pass through and may filter the floating foreign matter from the seawater 10.

The scrapers 73 and 76 may be disposed on one side of the mesh screen 72 and an inner side of the housing 70a, respectively, and may vertically move to scrape stuck objects such as barnacles off the mesh screen 72 and the housing 70a.

The foreign matter discharged together with the seawater 10 through the foreign matter outlet 70d may be introduced into the first stored water drain pipe 50 through a foreign matter discharge pipe 80.

A foreign matter discharge valve 81 may be disposed in the foreign matter discharge pipe 80.

The second water storage tank 200 may store second stored water in which the freshwater 20 of the water supply source and the first stored water of the first water storage tank 100 are mixed.

In the case where the first stored water intake pump 41 does not operate or the inlet valve 42 is closed so that the first stored water is not introduced into the second water storage tank 200, only the freshwater 20 may be stored in the second water storage tank 200.

The controller 600 may measure the water level of the water supply source and may determine a normal situation, a drought situation, or a flood situation.

When the controller 600 determines the drought situation according to an automatic operating algorithm, the controller 600 may operate the intake pump 41 and open the inlet valve 42 such that the first stored water is introduced into the second water storage tank 200, and when the controller 600 determines the normal situation or the flood situation, the controller 600 may stop the intake pump 41 and close the inlet valve 42 such that the first stored water is not introduced into the second water storage tank 200.

The automatic operating algorithm of the controller 600 will be described in detail in the description of the controller 600.

The first stored water inflow pipe 40 and a freshwater inflow pipe 22 may be connected to one side of the second water storage tank 200, and a second stored water drain pipe may be connected to an opposite side of the second water storage tank 200. The first stored water in the first water storage tank 100 may be introduced into the second water storage tank 200 through the first stored water inflow pipe 40. The freshwater 20 in the water supply source may be introduced into the second water storage tank 200 through the freshwater inflow pipe 22. The second stored water in the second water storage tank 200 may be released to the water treatment device 300 through the second stored water drain pipe.

A pump 21 for a flow of the freshwater 20 may be disposed in the freshwater inflow pipe 22.

The second stored water in the second water storage tank 200 may be introduced into the water treatment device 300, and the water treatment device 300 may release potable water purified through water-quality improvement pre-treatment and desalination. The potable water purified through the water treatment device 300 may be introduced into the city 1 through a potable water inflow pipe 90.

The water treatment device 300 includes a pre-treatment device 400 and the desalination device 500.

The desalination device 500 may be combined with or detached from the pre-treatment device 400 under the control of the controller 600.

For example, in the drought situation, the controller 600 may combine the pre-treatment device 400 and the desalination device 500, and in the normal situation or the flood situation, the controller 600 may detach the desalination device 500 from the pre-treatment device 400.

Referring to FIG. 3, the pre-treatment device 400 may include a receiving well 410, a coagulation means 420, a sedimentation means 430, a filtration means 440, a membrane filtration means 450, an ozone treatment means 460, an activated carbon treatment means 470, a chlorine treatment means 480, and a dehydration means 490.

The receiving well 410 is a component into which the second stored water is introduced. The receiving well 410 adjusts the amount of second stored water introduced and uniformly maintains the amount of raw water that is supplied to a water treatment process, thereby allowing processes such as introducing chemicals, filtration, sedimentation, and the like to be effectively performed.

The receiving well 410 may include an overflow pipe or an overflow weir for preventing the water level from being excessively raised, and may further include a screen for removing floating materials.

The coagulation means 420 is a component in which foreign matter (e.g., sludge, debris, or the like) contained in the second stored water is coagulated by coagulant. The coagulation means 420 may be subordinate to a mixing basin (not illustrated).

The sedimentation means 430 is a component in which the foreign matter coagulated by the coagulant is deposited.

The filtration means 440 is a component that removes organic matter and nutritive salts through a biological reaction that causes the introduced second stored water to react with microorganisms, and that oxidizes and filters ammonia nitrogen.

The membrane filtration means 450 may be selected separately from processes after the receiving well 410 and may perform a membrane separation process on the second stored water introduced. The membrane filtration means 450 may be based on a microfiltration (MF) membrane or an ultrafiltration (UF) membrane and may include an inflow pipe through which the second stored water is introduced into the membrane filtration means 450, a membrane filtration unit (a separation membrane), chemical piping, backwash piping, and the like.

The second stored water having passed through the sedimentation means 430 or the membrane filtration means 450 passes through the ozone treatment means 460 and the activated carbon treatment means 470.

The ozone treatment means 460 is a component that injects ozone into the second stored water and performs an ozone reaction on the second stored water. The ozone treatment means 460 includes an ozone reaction tank in which the ozone reaction is performed and an ozone generator that generates and injects ozone into the ozone reaction tank.

The ozone treatment means 460 uses ozone ($O_3$) having strong oxidation power to remove organic matter that is not well removed in a standard secondary treatment process and change properties of taste/odor-causing substances in the second stored water such that the taste/odor-causing substances are well adsorbed onto activated carbon.

The activated carbon treatment means 470 is a component that performs activated carbon treatment on the second stored water. The activated carbon treatment means 470 removes foreign matter (e.g., organic matter, taste/odor-causing substances, phenols, or the like) that are contained in the second stored water.

The activated carbon treatment means 470 may treat the second stored water through a powdered activated carbon process of stirring activated carbon in a powder state into the second stored water and depositing and filtering the activated carbon, a granular activated carbon process of allowing the second stored water to pass through adsorptive carbon constituted by granular carbon, or the like.

The chlorine treatment means 480 is a component that injects chlorine into the second stored water. The chlorine treatment means 480 uses oxidation and sterilizing action of chlorine to preserve residual chlorine right before the supply of water as well as to destroy germs or bacteria, remove iron or manganese, remove ammonia, or remove taste/odor.

The dehydration means 490 is a facility that forcibly feeds concentrated sludge generated in the sedimentation means 430 or the membrane filtration means 450 into a slurry storage tank 95 to maintain moisture content at a predetermined value during operation. At this time, polymer coagulant may be injected into the sludge through a pump to increase dehydration efficiency.

The desalination device 500 may include a nanofiltration means 510, a reverse osmosis means 520, and an energy recovery means 530.

The controller 600 may adjust the inflow ratio of the second stored water that is introduced into the desalination device 500 from the pre-treatment device 400 according to the automatic operating algorithm.

The second stored water introduced into the desalination device 500 is treated-water that has been pretreated by advanced water purification (ozone and activated carbon) in the pre-treatment device 400. That is, the second stored water from which organic matter is removed may be introduced into the desalination device 500.

Accordingly, the nanofiltration means 510 may be operated with high flux, and because the second stored water introduced into the reverse osmosis means 520 is water from which organic matter is removed one more time through the nanofiltration means 510, the reverse osmosis means 520 may also be operated with high flux.

When the nanofiltration means 510 and the reverse osmosis means 520 are operated with high flux, a membrane fouling phenomenon may be intensified if organic matter contained in introduced water has a high concentration. However, the inventive concept may prevent this problem by removing organic matter from the second stored water and may thus provide an effect of stably operating the treatment facility.

The nanofiltration means 510 filters the second stored water pre-treated in and introduced from the pre-treatment device 400 and releases produced water and concentrated water. Here, the nanofiltration means 510 may preferably include a plurality of nanofiltration (NF) membranes arranged and installed therein.

The nanofiltration means 510 may be installed upstream of the reverse osmosis means 520 to control hardness and organic matter. Accordingly, the nanofiltration means 510 may previously control the hardness of the second stored water that is introduced into a reverse osmosis membrane of the reverse osmosis means 520 and the concentrations of various organics in the second stored water.

The reverse osmosis means 520 may produce a larger amount of produced water at the same water pressure because the hardness is controlled, and the treatment facility may be more stably operated in a high flux condition because the organics are controlled.

The reverse osmosis means 520 filters pressurized filtered-water released from a high-pressure pump by using a reverse osmosis method and releases produced water and concentrated water. Here, the reverse osmosis means 520 may preferably include a plurality of reverse osmosis (RO) membranes arranged and installed therein.

The membranes applied to the reverse osmosis means 520 are brackish water reverse osmosis (BWRO) membranes having high flux efficiency. That is, the reverse osmosis facility may be operated with higher flux when the same water pressure is applied. Accordingly, a larger amount of produced water may be produced with regard to the same membrane area, and thus the size of the desalination device 500 may be reduced.

The concentrated water of the nanofiltration means 510 and the reverse osmosis means 520 may be introduced into the dehydration means 490.

The energy recovery means 530 is a component that is operated by the concentrated water released from the reverse osmosis means 520 to recover energy. The energy recovery means 530 may include any one selected from a Pelton turbine, Francis turbine, and a turbocharger turbine, as an energy recovery device (ERD).

The desalination device 500 of the inventive concept may be selectively operated only in case of drought. Hence, the desalination device 500 may be installed so as to be easily combined with or detached from the pre-treatment device 400. Furthermore, the desalination device 500 may be easily moved for usage in another place according to necessity because the facility size of the desalination device 500 is small.

That is, because the desalination device 500 is intermittently operated, the desalination device 500 may be easily exposed to a sudden water pressure change and corrosion, which may cause a problem in terms of durability. Therefore, the desalination device 500 may preferably be designed to increase the durability thereof by using a pump capable of gradually regulating pressure and a material having high resistance to corrosion.

Meanwhile, the produced water released from the desalination device 500 may be introduced into the chlorine treatment means 480 and mixed with the second stored water not passing through the desalination device 500, after which the mixture of the produced water and the second stored water may be treated with chlorine and then released as potable water.

As described above, the controller 600 may control an overall operation of the water supply management system 100 by reflecting the automatic operating algorithm.

The controller 600 may obtain the water level of the water supply source and may determine a drought situation, a normal situation, and a flood situation.

Especially, the controller 600 may determine the drought situation when the current water level A of the water supply source is lower than a preset first water level B.

The controller 600 determines an initial drought situation when the current water level A of the water supply source is lower than the preset first water level B and higher than a preset second water level C (water-intake level), and the controller 600 determines a severe drought situation when the current water level A of the water supply source is lower than the preset second water level C.

As listed in Table 1 below, the controller 600 may determine the drought situation and may adjust the inflow rate of the freshwater 20 introduced from the water supply source and the inflow rate of the first stored water introduced from the first water storage tank 100.

[Table 1]

| | Inflow Rate of Freshwater | Inflow Rate of First Stored water | Inflow Rate of Second Stored water |
|---|---|---|---|
| Normal: $A \geq B$ | Q1 | 0 | Q1 |
| Initial Drought: $C \leq A < B$ | $\dfrac{A-C}{B-C} \times Q1$ | $Q1 - \dfrac{A-C}{B-C} \times Q1$ | Q1 |
| Severe Drought: $A < C$ | 0 | Q1 | Q1 |

That is, the flow rate of water taken into a water purification plant is Q1 in the normal situation. When the flow rate of the freshwater 20 introduced from the water supply source is lower than the existing inflow rate according to the drought situation, the first stored water is introduced into the second water storage tank 200 to supplement the flow-rate reduction. The flow rate reduced after operation of the desalination facility is supplemented by increasing the flow rate of the first stored water. Meanwhile, the first stored water may have a high salinity, and therefore the salinity of the first stored water needs to be lowered. Simultaneously, the flow rate of potable water required for the city 1 has to be provided. Hence, the controller 600 may set a target outflow rate of potable water and a target salinity of the potable water first.

Furthermore, the controller 600 may measure the salinities of the currently introduced freshwater 20 and the first stored water and may calculate the salinity of the second stored water that is stored in the second water storage tank 200.

Meanwhile, because a slight flow loss occurs when the second stored water is subjected to a pre-treatment (water purification) process, the controller 600 determines the inflow ratio of the second stored water through first calculation using the following Equation 1 in the process in which all or part of the second stored water passing through the pre-treatment device 400 is introduced into the desalination device 500.

[Equation 1]

$$Q2 = Q3 + Q4$$

$$Q3 = Q2 \times X$$

$$C2 = C3 = C4$$

$$Q4 = Q2 \times (1 - X)$$

$$Q2 \times C2 = Q3 \times C3 + Q4 \times C4$$

$$C_{target} = \frac{Q3 \times Y \times C3(1 - R) + Q4 \times C4}{Q2}$$

$$= \frac{Q2x \times Y \times C2(1 - R) + Q2(1 - x) \times C2}{Q2}$$

$$= \{x \times Y \times (1 - R) + (1 - x)\}C2$$

Here, Q2 denotes the outflow rate of the second stored water passing through the pre-treatment device 400, Q3 denotes the inflow rate of the second stored water introduced into the desalination device 500, Q4 denotes the inflow rate of the second stored water not introduced into the desalination device 500, C2 denotes the salinity of the second stored water passing through the pre-treatment device 400, C3 denotes the salinity of the second stored water introduced into the desalination device 500, C4 denotes the salinity of the second stored water not introduced into the desalination device 500, Y denotes a target recovery rate in the desalination device 500, R denotes a removal rate in the desalination device 500, and $C_{target}$ denotes the target salinity of the potable water.

The first calculation is a rough calculation for determining the initial inflow ratio of the second stored water into the desalination device 500. The value of x, that is, the inflow ratio of the second stored water introduced into the desalination device 500 may be roughly calculated by solving Equation 1.

However, the final salinity of the potable water has to be lower than the target salinity of the potable water, and the inflow ratio of the second stored water into the desalination device 500 may be adjusted correspondingly. Here, it is more advantageous in terms of energy as the inflow ratio of the second stored water into the desalination device 500 decreases.

Because the flow rate and salinity of the second stored water introduced into the desalination device 500 are calculated, the controller 600 may calculate pressure required for a process of the desalination device 500 by reflecting the desalination performance as illustrated in FIG. 5 and may calculate the flow rate and salinity of produced water of the desalination device 500 according to the desalination performance.

In FIG. 5, $J_W$ denotes treated water flux and may be defined by the following Equation 2, $Q_p$ denotes the outflow rate of the produced water and may be defined by the following Equation 3, $J_s$ denotes salt flux and may be defined by the following Equation 4, and $C_p$ denotes the salinity of the produced water and may be defined by the following Equation 5.

[Equation 2]

$$J_w = A \times TCF[(P_b - P_p) - (CPF \times \pi_b - \pi_p)]$$

[Equation 3]

$$Q_p = J_w \times Area$$

[Equation 4]

$$J_s = B \times TCF(CPF \times C_b - C_p)$$

[Equation 5]

$$C_p = \frac{J_s}{J_w}$$

Here, TCF denotes a temperature correction factor, CPF denotes a concentration polarization factor, P denotes water pressure, $\Pi$ denotes osmotic pressure, Q denotes a flow rate, C denotes salinity, J denotes flux, w denotes water, s denotes salt, b denotes bulk, p denotes permeate, Area denotes a membrane area, A denotes a water permeability coefficient, and B denotes a salt permeability coefficient.

Thereafter, the controller 600 may calculate the outflow rate and salinity of the produced water in the desalination device 500 according to the desalination performance. Furthermore, based on the outflow rate and salinity of the produced water, the controller 600 may calculate the final outflow rate and the final salinity of the potable water in which the produced water of the desalination device 500 and the second stored water not passing through the desalination device 500 are mixed.

Meanwhile, when the final outflow rate of the potable water is much higher or lower than the target outflow rate of the potable water, the controller 600 may adjust the inflow rate of the first stored water from the first water storage tank 100.

That is, the controller 600 decreases the inflow rate of the first stored water from the first water storage tank 100 when the final outflow rate of the potable water is higher than the target outflow rate of the potable water, and the controller 600 increases the inflow rate of the first stored water from the first water storage tank 100 when the final outflow rate of the potable water is lower than the target outflow rate of the potable water.

Furthermore, the controller 600 may identify and adjust the salinity of the potable water when the final outflow rate of the potable water is within a set target range, compared with the target outflow rate of the potable water.

That is, the controller 600 further increases the inflow ratio of the second stored water introduced into the desalination device 500 when the final salinity of the potable water is much higher than the target salinity of the potable water, and the controller 600 decreases the inflow ratio of the second stored water introduced into the desalination device 500 when the final salinity of the potable water is much lower than the target salinity of the potable water.

Even if the final salinity of the potable water is too low, it does not matter. However, the controller 600 may preferably reduce the inflow rate of the second stored water introduced into the desalination device 500 in terms of economy.

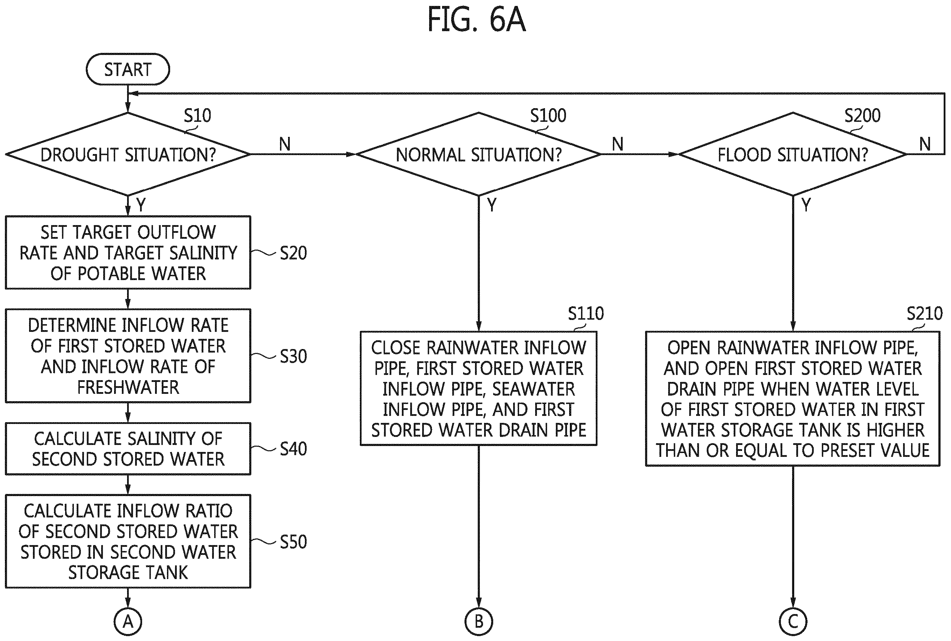

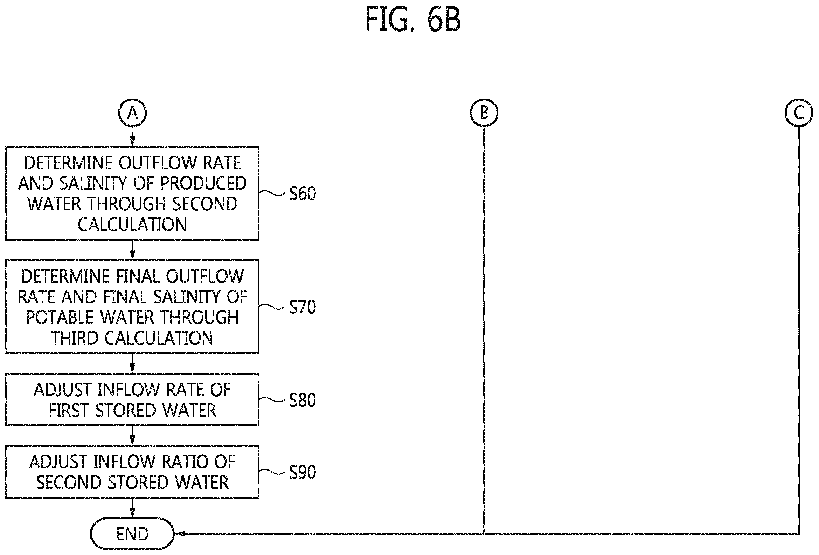

Hereinafter, a water supply management method according to an embodiment of the inventive concept will be described with reference to FIG. 6A and FIG. 6B.

FIG. 6A and FIG. 6B is a flowchart illustrating the water supply management method according to the embodiment of the inventive concept.

Referring to FIGS. 1 to 5 together with FIG. 6A and FIG. 6B, the water supply management method according to the embodiment of the inventive concept includes a step of determining a drought situation (S10), a step of introducing freshwater and first stored water into the second water storage tank 200 in the drought situation (S20, S30, S40, S50, S60, S70, S80, and S90), a step of determining a normal situation (S100), a step of closing the rainwater inflow pipe 33, the first stored water inflow pipe 40, the seawater inflow pipe 60, and the first stored water drain pipe 50 in the normal situation (S110), a step of determining a flood situation (S200), and a step of opening the rainwater inflow pipe 33 in the flood situation and opening the first stored water drain pipe 50 when the water level of the first stored water in the first water storage tank 100 is higher than or equal to a preset value (S210).

The controller 600 may obtain the water level of the water supply source and may determine the drought situation, the normal situation, and the flood situation.

In the step of determining the drought situation (S10), the controller 600 may determine the drought situation when the current water level A of the water supply source is lower than the preset first water level B.

The controller 600 determines an initial drought situation when the current water level A of the water supply source is lower than the preset first water level B and higher than the preset second water level C (water-intake level), and the controller 600 determines a severe drought situation when the current water level A of the water supply source is lower than the preset second water level C.

The step of introducing the freshwater and the first stored water into the second water storage tank 200 in the drought situation (S20, S30, S40, S50, S60, S70, S80, and S90) may include a step of setting a target outflow rate of potable water and a target salinity of the potable water (S20), a step of opening, by the controller 600, the first stored water inflow pipe 40 to introduce the first stored water in the first water storage tank 100 into the second water storage tank 200 and determining an inflow rate of the first stored water and an inflow rate of the freshwater based on the current water level A of the water supply source (S30), a step of calculating, by the controller 600, the salinity of second stored water that is stored in the second water storage tank 200 (S40), a step of determining, by the controller 600, the inflow ratio of the second stored water introduced into the desalination device 500 to the second stored water subjected to a pre-treatment process in the pre-treatment device 400, through first calculation (S50), a step of reflecting, by the controller 600, the desalination performance of the desalination device 500 and determining an outflow rate and a salinity of produced water released through the desalination device 500, through second calculation (S60), a step of determining, by the controller 600, the final outflow rate and the final salinity of the potable water released through the water treatment device 300, through third calculation (S70), a step of comparing, by the controller 600, the target outflow rate of the potable water and the final outflow rate of the potable water and adjusting the inflow rate of the first stored water (S80), and a step of comparing, by the controller 600, the target salinity of the potable water and the final salinity of the potable water and adjusting the inflow ratio of the second stored water introduced into the desalination device 500 (S90).

In the step of setting the target outflow rate of the potable water and the target salinity of the potable water (S20), because it is necessary to lower the salinity of the first stored water introduced into the second water storage tank 200 in the drought situation and the flow rate of the potable water required for the city 1 has to be provided, the controller 600 may set the target outflow rate of the potable water and the target salinity of the potable water first.

In the step of determining the inflow rate of the first stored water and the inflow rate of the freshwater based on the current water level A of the water supply source (S30), when the inflow rate of the freshwater introduced from the water supply source is lower than the existing inflow rate according to the drought situation, the first stored water is introduced into the second water storage tank 200 to supplement the flow-rate reduction.

In the step of calculating, by the controller 600, the salinity of the second stored water that is stored in the second water storage tank 200 (S40), the controller 600 may measure the salinities of the currently introduced freshwater and the first stored water and may calculate the salinity of the second stored water that is stored in the second water storage tank 200.

In the step of determining, by the controller 600, the inflow ratio of the second stored water introduced into the desalination device 500 to the second stored water subjected to the pre-treatment process in the pre-treatment device 400, through the first calculation (S50), the controller 600 determines the inflow ratio of the second stored water through the first calculation using the following Equation 6 in the process in which all or part of the second stored water passing through the pre-treatment device 400 is introduced into the desalination device 500, because a slight flow loss occurs when the second stored water is subjected to the pre-treatment (water purification) process.

[Equation 6]

$$Q2 = Q3 + Q4$$

$$Q3 = Q2 \times X$$

$$C2 = C3 = C4$$

$$Q4 = Q2 \times (1-X)$$

$$Q2 \times C2 = Q3 \times C3 + Q4 \times C4$$

$$
\begin{aligned}
C_{target} &= \frac{Q3 \times Y \times C3(1-R) + Q4 \times C4}{Q2} \\
&= \frac{Q2x \times Y \times C2(1-R) + Q2(1-x) \times C2}{Q2} \\
&= \{x \times Y \times (1-R) + (1-x)\}C2
\end{aligned}
$$

Here, Q2 denotes the outflow rate of the second stored water passing through the pre-treatment device 400, Q3 denotes the inflow rate of the second stored water introduced into the desalination device 500, Q4 denotes the inflow rate of the second stored water not introduced into the desalination device 500, C2 denotes the salinity of the second stored water passing through the pre-treatment device 400, C3 denotes the salinity of the second stored water introduced into the desalination device 500, C4 denotes the salinity of the second stored water not introduced into the desalination device 500, Y denotes a target recovery rate in the desalination device 500, R denotes a removal rate in the desalination device 500, and $C_{target}$ denotes the target salinity of the potable water.

The first calculation is a rough calculation for determining the initial inflow ratio of the second stored water into the desalination device 500. The value of x, that is, the inflow ratio of the second stored water introduced into the desalination device 500 may be roughly calculated by solving Equation 6.

However, the final salinity of the potable water has to be lower than the target salinity of the potable water, and the inflow ratio of the second stored water into the desalination device 500 may be adjusted correspondingly. Here, it is more advantageous in terms of energy as the inflow ratio of the second stored water into the desalination device 500 decreases.

In the step of reflecting, by the controller 600, the desalination performance of the desalination device 500 and determining the outflow rate and the salinity of the produced water released through the desalination device 500, through the second calculation (S60), the controller 600 may calculate pressure required for a process of the desalination device 500 by reflecting the desalination performance as illustrated in FIG. 5 and may calculate the flow rate and salinity of the produced water of the desalination device 500 according to the desalination performance, because the flow rate and salinity of the second stored water introduced into the desalination device 500 are calculated.

In FIG. 5, $J_W$ denotes treated water flux and may be defined by the following Equation 7, $Q_p$ denotes the outflow rate of the produced water and may be defined by the following Equation 8, $J_s$ denotes salt flux and may be defined by the following Equation 9, and $C_p$ denotes the salinity of the produced water and may be defined by the following Equation 10.

[Equation 7]

$$J_w = A \times TCF[(P_b - P_p) - (CPF \times \pi_b - \pi_p)]$$

[Equation 8]

$$Q_p = J_w \times Area$$

[Equation 9]

$$J_s = B \times TCF(CPF \times C_b - C_p)$$

[Equation 10]

$$C_p = \frac{J_s}{J_w}$$

Here, TCF denotes a temperature correction factor, CPF denotes a concentration polarization factor, P denotes water pressure, $\Pi$ denotes osmotic pressure, Q denotes a flow rate, C denotes salinity, J denotes flux, w denotes water, s denotes salt, b denotes bulk, p denotes permeate, Area denotes a membrane area, A denotes a water permeability coefficient, and B denotes a salt permeability coefficient.

In the step of determining, by the controller 600, the final outflow rate and the final salinity of the potable water released through the water treatment device 300, through the third calculation (S70), the controller 600 may calculate the outflow rate and salinity of the produced water in the desalination device 500 according to the desalination performance.

Furthermore, based on the outflow rate and salinity of the produced water, the controller 600 may calculate the final outflow rate and the final salinity of the potable water in which the produced water of the desalination device 500 and the second stored water not passing through the desalination device 500 are mixed.

In the step of comparing, by the controller 600, the target outflow rate of the potable water and the final outflow rate of the potable water and adjusting the inflow rate of the first stored water (S80), the controller 600 may adjust the inflow rate of the first stored water from the first water storage tank 100 when the final outflow rate of the potable water is much higher or lower than the target outflow rate of the potable water.

That is, the controller 600 decreases the inflow rate of the first stored water from the first water storage tank 100 when the final outflow rate of the potable water is higher than the target outflow rate of the potable water, and the controller 600 increases the inflow rate of the first stored water from the first water storage tank 100 when the final outflow rate of the potable water is lower than the target outflow rate of the potable water.

In the step of comparing, by the controller 600, the target salinity of the potable water and the final salinity of the potable water and adjusting the inflow ratio of the second stored water introduced into the desalination device 500 (S90), the controller 600 may identify and adjust the salinity of the potable water when the final outflow rate of the potable water is within a set target range, compared with the target outflow rate of the potable water.

That is, the controller 600 further increases the inflow ratio of the second stored water introduced into the desalination device 500 when the final salinity of the potable water is much higher than the target salinity of the potable water, and the controller 600 decreases the inflow ratio of the second stored water introduced into the desalination device 500 when the final salinity of the potable water is much lower than the target salinity of the potable water.

Even if the final salinity of the potable water is too low, it does not matter. However, the controller 600 may preferably reduce the inflow rate of the second stored water introduced into the desalination device 500 in terms of economy.

The above-described water supply management method may be recorded in a computer-readable recording medium including instructions for performing the method and may be read out of a computer by a user.

In this regard, the embodiment of the inventive concept may be written in various languages and may be reorganized to be suitable for a specific environment. For example, in the case of an 8-bit processor, the embodiment of the inventive concept may be written in assembly language and the C programming language, and in various 32-bit processors or generic-purpose computers, the embodiment of the inventive concept may be written in a variety of available programs.

According to the embodiments of the inventive concept, the water supply management system and method may stably ensure potable water in a drought situation and may rapidly drain rainwater overflowing in a flood situation.

Effects of the inventive concept are not limited to the aforementioned effects, and any other effects not mentioned herein will be clearly understood from the following description by those skilled in the art to which the inventive concept pertains.

**Claims**

1. A water supply management system (1000) comprising a first water storage tank (100), a second water storage tank (200), a water treatment device (300), a controller (600) configured to control opening or closing of inflow pipes and drain pipes connected to the first water storage tank (100), the second water storage tank (200), and the water treatment device (300);
wherein the first water storage tank (100) stores first stored water; wherein at least one of rainwater (30) and seawater (10) overflowing in case of flood is introduced into the first water storage tank (100) to form the first stored water; wherein the second water storage tank (200) stores second stored water, and
wherein the controller (600) controls inflow rates and outflow rates of the rainwater (30), the seawater (10), freshwater (20), the first stored water, the second stored water, and potable water; **characterized in that**:

at least one of the freshwater (20) in a water supply source and the first stored water in the first water storage tank (100) is introduced into the second water storage tank (200) to form the second stored water; and
the water treatment device (300) purifies the second stored water released from the second water storage tank (200) and releases the potable water.

**2.** The water supply management system (1000) of claim 1, **characterized in that** the first water storage tank (100) includes:

a rainwater inflow pipe (33) through which the rainwater (30) is introduced into the first storage tank (100);
a first stored water inflow pipe (40) through which the first stored water is introduced into the second water storage tank (200);
seawater inflow pipes (60, 62) through which the seawater (10) is introduced into the first water storage tank (100); and
a first stored water drain pipe (50) through which the first stored water is released to the sea.

**3.** The water supply management system (1000) of claim 2, **characterized in that**:

the controller (600) controls valves (32, 42, 61, 51) disposed in the rainwater inflow pipe (33), the first stored water inflow pipe (40), the seawater inflow pipes (60, 62), and the first stored water drain pipe (50), respectively; and
the controller (600) controls pumps (41, 52) disposed on the first stored water inflow pipe (40) and the first stored water drain pipe (50), respectively.

**4.** The water supply management system (1000) of claim 3, **characterized in that**:

the controller (600) determines a normal situation, a drought situation, or a flood situation, based on a water level of the water supply source;
in the normal situation, the controller (600) closes the rainwater inflow pipe (33), the first stored water inflow pipe (40), the seawater inflow pipes (60, 62), and the first stored water drain pipe (50);
in the drought situation, the controller (600) opens the seawater inflow pipes (60, 62) and the first stored water inflow pipe (40) and closes the first stored water drain pipe (50); and
in the flood situation, the controller (600) opens the rainwater inflow pipe (33), and the controller (600) opens the first stored water drain pipe (50) when a water level of the first stored water in the first water storage tank (100) is higher than or equal to a preset value.

**5.** The water supply management system (1000) of claim 4, **characterized in that**:

a foreign material removal device (70) is disposed in the seawater inflow pipes (60, 62) to remove foreign matter contained in the seawater (10); and
the removed foreign matter is discharged to the sea through the first stored water drain pipe (50).

**6.** The water supply management system (1000) of claim 5, **characterized in that** the foreign material removal device (70) includes:

a housing (70a) including a seawater inlet (70b), a seawater outlet (70c), and a foreign matter outlet (70d);
blades (71, 74) configured to stir and break foreign matter in the seawater (10) introduced from the sea;
a mesh screen (72) configured to filter foreign matter floating in the housing (70a); and
scrapers (73, 76) configured to scrape foreign matter off the mesh screen (72) and a sidewall of the housing (70a).

**7.** The water supply management system (1000) of claim 4, **characterized in that** the water treatment device (300)

includes:

a pre-treatment device (400) including a coagulation means (420), a sedimentation means (430), and a filtration means (440), the pre-treatment device (400) being configured to control water quality of the second stored water; and
a desalination device (500) disposed downstream of the pre-treatment device (400), the desalination device (500) being configured to remove dissolved matter containing salt from part of the second stored water and release produced water.

8. The water supply management system (1000) of claim 7, **characterized in that** the pre-treatment device (400) further includes an ozone treatment means (460) and an activated carbon treatment means (470).

9. The water supply management system (1000) of claim 8, **characterized in that** the desalination device (500) includes a nanofiltration means (510) and a reverse osmosis means (520).

10. The water supply management system (1000) of claim 9, **characterized in that**:

the desalination device (500) is combinable with or detachable from the pre-treatment device (400);
the controller (600) combines the desalination device (500) with the pre-treatment device (400) in the drought situation; and
the controller (600) detaches the desalination device (500) from the pre-treatment device (400) in the normal situation.

11. The water supply management system (1000) of claim 10, **characterized in that** the controller (600):

determines the drought situation when a current water level A of the water supply source is lower than a first water level B;
sets a target outflow rate of the potable water and a target salinity of the potable water;
opens the first stored water inflow pipe (40) to introduce the first stored water in the first water storage tank (100) into the second water storage tank (200), and determines an inflow rate of the first stored water and an inflow rate of the freshwater (20) based on the current water level A of the water supply source;
measures salinities of the freshwater (20) and the first stored water and calculates a salinity of the second stored water that is stored in the second water storage tank (200);
determines an inflow ratio of the second stored water introduced into the desalination device (500) to the second stored water subjected to a pre-treatment process in the pre-treatment device (400), through first calculation;
reflects desalination performance of the desalination device (500) and determines an outflow rate and a salinity of the produced water released from the desalination device (500), through second calculation;
determines a final outflow rate and a final salinity of the potable water released from the water treatment device (300), through third calculation;
compares the target outflow rate of the potable water and the final outflow rate of the potable water and adjusts the inflow rate of the first stored water; and
compares the target salinity of the potable water and the final salinity of the potable water and adjusts the inflow ratio of the second stored water introduced into the desalination device (500).

12. A water supply management method implemented by the water supply management system according to one of the preceding claims, **characterized in that** the water supply management method comprises:

a step of obtaining, by the controller (600), a current water level of a water supply source and determining a drought situation, a normal situation, and a flood situation based on the current water level of the water supply source (S10);
a step of adjusting, by the controller (600), an inflow rate of freshwater (20) from the water supply source and an inflow rate of first stored water from the first water storage tank (100) and introducing the freshwater (20) and the first stored water into the second water storage tank (200), when the controller (600) determines the drought situation;
a step of closing, by the controller (600), the rainwater inflow pipe (33), the first stored water inflow pipe (40), the seawater inflow pipes (60, 62), and the first stored water drain pipe (50), when the controller (600) determines the normal situation (S110); and
a step of opening, by the controller (600), the rainwater inflow pipe (33) when the controller (600) determines the flood situation, and opening the first stored water drain pipe (50) when a water level of the first stored water in the first water storage tank (100) is higher than or equal to a preset value (S210).

13. The water supply management method of claim 12, **characterized in that** the step of introducing the freshwater (20) and the first stored water into the second water storage tank (200) includes:

a step of setting, by the controller (600), a target outflow rate of potable water and a target salinity of the potable water (S20);

a step of opening, by the controller (600), the first stored water inflow pipe (40) to introduce the first stored water in the first water storage tank (100) into the second water storage tank (200) and determining an inflow rate of the first stored water and an inflow rate of the freshwater (20) based on the current water level of the water supply source (S30);

a step of calculating, by the controller (600), a salinity of second stored water that is stored in the second water storage tank (200) (S40);

a step of determining, by the controller (600), an inflow ratio of the second stored water introduced into the desalination device (500) to the second stored water subjected to a pre-treatment process in the pre-treatment device (400), through first calculation (S50);

a step of reflecting, by the controller (600), desalination performance of the desalination device (500) and determining an outflow rate and a salinity of produced water released from the desalination device (500), through second calculation (S60);

a step of determining, by the controller (600), a final outflow rate and a final salinity of the potable water released from the water treatment device (300), through third calculation (S70);

a step of comparing, by the controller (600), the target outflow rate of the potable water and the final outflow rate of the potable water and adjusting the inflow rate of the first stored water (S80); and

a step of comparing, by the controller (600), the target salinity of the potable water and the final salinity of the potable water and adjusting the inflow ratio of the second stored water introduced into the desalination device (500) (S90).

14. The water supply management method of claim 13, **characterized in that**:

in the step of comparing, by the controller (600), the target outflow rate of the potable water and the final outflow rate of the potable water and adjusting the inflow rate of the first stored water (S80), the controller (600) decreases the inflow rate of the first stored water from the first water storage tank (100) when the final outflow rate of the potable water is higher than the target outflow rate of the potable water, and the controller (600) increases the inflow rate of the first stored water from the first water storage tank (100) when the final outflow rate of the potable water is lower than the target outflow rate of the potable water; and

in the step of comparing, by the controller (600), the target salinity of the potable water and the final salinity of the potable water and adjusting the inflow ratio of the second stored water introduced into the desalination device (500) (S90), the controller (600) determines that the final outflow rate of the potable water is within a set target range, compared with the target outflow rate of the potable water, after which the controller (600) further increases the inflow ratio of the second stored water introduced into the desalination device (500) when the final salinity of the potable water is much higher than the target salinity of the potable water and the controller (600) decreases the inflow ratio of the second stored water introduced into the desalination device (500) when the final salinity of the potable water is much lower than the target salinity of the potable water.

15. A computer-readable recording medium comprising instructions that, when executed by a computer, cause the computer to perform the water supply management method of claim 12.

## Patentansprüche

1. Wasserversorgungsmanagementsystem (1000), umfassend einen ersten Wasserspeichertank (100), einen zweiten Wasserspeichertank (200), eine Wasseraufbereitungsvorrichtung (300), eine Steuerung (600), die dazu konfiguriert ist, das Öffnen oder Schließen von Zufluss- und Abflussrohren zu steuern, die mit dem ersten Wasserspeichertank (100), dem zweiten Wasserspeichertank (200) und der Wasseraufbereitungsvorrichtung (300) verbunden sind; wobei der erste Wasserspeichertank (100) erstes gespeichertes Wasser speichert; wobei mindestens eines von Regenwasser (30) und Meerwasser (10), das im Falle eines Hochwassers überläuft, in den ersten Wasserspeichertank (100) eingeführt wird, um das erste gespeicherte Wasser zu bilden;

wobei der zweite Wasserspeichertank (200) zweites gespeichertes Wasser speichert, und

wobei die Steuerung (600) die Zufluss- und Abflussraten des Regenwassers (30), des Meerwassers (10), des Frischwassers (20), des ersten gespeicherten Wassers, des zweiten gespeicherten Wassers und des Trinkwassers steuert; **dadurch gekennzeichnet, dass**

mindestens eines des Frischwassers (20) in einer Wasserversorgungsquelle und des ersten gespeichertes Wassers in dem ersten Wasserspeichertank (100) in den zweiten Wasserspeichertank (200) eingeführt wird, um das zweite gespeicherte Wasser zu bilden; und

die Wasseraufbereitungsvorrichtung (300) das zweite gespeicherte Wasser, das aus dem zweiten Wasserspeichertank (200) freigesetzt wird, reinigt, und das Trinkwasser freisetzt.

2. Wasserversorgungsmanagementsystem (1000) gemäß Anspruch 1, **dadurch gekennzeichnet, dass** der erste Wasserspeichertank (100) Folgendes beinhaltet:

ein Regenwasserzuflussrohr (33), durch das das Regenwasser (30) in den ersten Wasserspeichertank (100) eingeführt wird;

ein Zuflussrohr für erstes gespeichertes Wasser (40), durch das das erste gespeicherte Wasser in den zweiten Wasserspeichertank (200) eingeführt wird;

Meerwasserzuflussrohre (60, 62), durch die das Meerwasser (10) in den ersten Wasserspeichertank (100) eingeführt wird; und

ein Abflussrohr für erstes gespeichertes Wasser (50), durch das das erste gespeicherte Wasser in das Meer freigesetzt wird.

3. Wasserversorgungsmanagementsystem (1000) gemäß Anspruch 2, **dadurch gekennzeichnet, dass**:

die Steuerung (600) die Ventile (32, 42, 61, 51) steuert, die in dem Regenwasserzuflussrohr (33) bzw. dem Zuflussrohr für erstes gespeichertes Wasser (40), den Meerwasserzuflussrohren (60, 62) und dem Abflussrohr für erstes gespeichertes Wasser (50) angeordnet sind; und

die Steuerung (600) Pumpen (41, 52) steuert, die an dem Zuflussrohr für erstes gespeichertes Wasser (40) bzw. dem Abflussrohr für erstes gespeichertes Wasser (50) angeordnet sind.

4. Wasserversorgungsmanagementsystem (1000) gemäß Anspruch 3, **dadurch gekennzeichnet, dass**:

die Steuerung (600) eine normale Situation, eine Trockenheitssituation oder eine Hochwassersituation basierend auf einem Wasserstand der Wasserversorgungsquelle bestimmt;

in der normalen Situation die Steuerung (600) das Regenwasserzuflussrohr (33), das Zuflussrohr für erstes gespeichertes Wasser (40), die Meerwasserzuflussrohre (60, 62) und das Abflussrohr für erstes gespeichertes Wasser (50) schließt;

in der Trockenheitssituation die Steuerung (600) die Meerwasserzuflussrohre (60, 62) und das Zuflussrohr für erstes gespeichertes Wasser (40) öffnet und das Abflussrohr für erstes gespeichertes Wasser (50) schließt; und

in der Hochwassersituation die Steuerung (600) das Regenwasserzuflussrohr (33) öffnet und die Steuerung (600) das Abflussrohr für erstes gespeichertes Wasser (50) öffnet, wenn ein Wasserstand des ersten gespeicherten Wassers in dem ersten Wasserspeichertank (100) höher oder gleich einem voreingestellten Wert ist.

5. Wasserversorgungsmanagementsystem (1000) gemäß Anspruch 4, **dadurch gekennzeichnet, dass**:

eine Fremdmaterialentfernungsvorrichtung (70) in den Meerwasserzuflussrohren (60, 62) angeordnet ist, um im Meerwasser (10) enthaltene Fremdstoffe zu entfernen; und

die entfernten Fremdstoffe durch das Abflussrohr für erstes gespeichertes Wasser (50) ins Meer abgeführt werden.

6. Wasserversorgungsmanagementsystem (1000) gemäß Anspruch 5, **dadurch gekennzeichnet, dass** die Fremdmaterialentfernungsvorrichtung (70) Folgendes beinhaltet:

ein Gehäuse (70a) einschließlich eines Meerwassereinlasses (70b), eines Meerwasserauslasses (70c) und eines Fremdstoffauslasses (70d);

Klingen (71, 74), die konfiguriert sind, um Fremdstoffe in dem aus dem Meer eingebrachten Meerwasser (10) zu rühren und zu zerbrechen;

ein Maschensieb (72), das konfiguriert ist, um in dem Gehäuse (70a) schwimmende Fremdstoffe zu filtern; und

Schaber (73, 76), die konfiguriert sind, um Fremdstoffe vom Maschensieb (72) und einer Seitenwand des Gehäuses (70a) abzuschaben.

7. Wasserversorgungsmanagementsystem (1000) gemäß Anspruch 4, **dadurch gekennzeichnet, dass** die Wasseraufbereitungsvorrichtung (300) Folgendes beinhaltet:

   eine Vorbehandlungsvorrichtung (400) einschließlich eines Koagulationsmittels (420), eines Sedimentationsmittels (430) und eines Filtrationsmittels (440), wobei die Vorbehandlungsvorrichtung (400) so konfiguriert ist, dass sie die Wasserqualität des zweiten gespeicherten Wassers steuert; und
   eine Entsalzungsvorrichtung (500), die stromabwärts der Vorbehandlungsvorrichtung (400) angeordnet ist, wobei die Entsalzungsvorrichtung (500) so konfiguriert ist, dass sie Salz enthaltendes gelöstes Material aus einem Teil des zweiten gespeicherten Wassers entfernt und erzeugtes Wasser freisetzt.

8. Wasserversorgungsmanagementsystem (1000) gemäß Anspruch 7, **dadurch gekennzeichnet, dass** die Vorbehandlungsvorrichtung (400) ferner ein Ozonbehandlungsmittel (460) und ein Aktivkohlebehandlungsmittel (470) beinhaltet.

9. Wasserversorgungsmanagementsystem (1000) gemäß Anspruch 8, **dadurch gekennzeichnet, dass** die Entsalzungsvorrichtung (500) ein Nanofiltrationsmittel (510) und ein Umkehrosmosemittel (520) beinhaltet.

10. Wasserversorgungsmanagementsystem (1000) gemäß Anspruch 9, **dadurch gekennzeichnet, dass**:

    die Entsalzungsvorrichtung (500) mit der Vorbehandlungsvorrichtung (400) kombinierbar oder von dieser lösbar ist;
    die Steuerung (600) die Entsalzungsvorrichtung (500) in der Trockenheitssituation mit der Vorbehandlungsvorrichtung (400) kombiniert; und
    die Steuerung (600) die Entsalzungsvorrichtung (500) in der normalen Situation von der Vorbehandlungsvorrichtung (400) löst.

11. Wasserversorgungsmanagementsystem (1000) gemäß Anspruch 10, **dadurch gekennzeichnet, dass** die Steuerung (600):

    die Trockenheitssituation bestimmt, wenn ein aktueller Wasserstand A der Wasserversorgungsquelle niedriger als ein erster Wasserstand B ist;
    eine Zielabflussrate des Trinkwassers und einen Zielsalzgehalt des Trinkwassers festlegt;
    das Zuflussrohr für erstes gespeichertes Wasser (40) öffnet, um das erste gespeicherte Wasser in dem ersten Wasserspeichertank (100) in den zweiten Wasserspeichertank (200) einzuführen, und eine Zuflussrate des ersten gespeicherten Wassers und eine Zuflussrate des Frischwassers (20) basierend auf dem aktueller Wasserstand A der Wasserversorgungsquelle bestimmt;
    die Salzgehalte des Frischwassers (20) und des ersten gespeicherten Wassers misst und einen Salzgehalt des zweiten gespeicherten Wassers, das im zweiten Wasserspeichertank (200) gespeichert ist, berechnet;
    ein Zuflussverhältnis des in die Entsalzungsvorrichtung (500) eingeführten zweiten gespeicherten Wassers zu dem einem Vorbehandlungsprozess in der Vorbehandlungsvorrichtung (400) unterzogenen zweiten gespeicherten Wasser durch erste Berechnung bestimmt;
    die Entsalzungsleistung der Entsalzungsvorrichtung (500) wiedergibt und eine Abflussrate und einen Salzgehalt des von der Entsalzungsvorrichtung (500) freigesetzten erzeugten Wassers durch zweite Berechnung bestimmt;
    eine endgültige Abflussrate und einen endgültigen Salzgehalt des von der Wasseraufbereitungsvorrichtung (300) freigesetzten Trinkwassers durch dritte Berechnung bestimmt;
    die Zielabflussrate des Trinkwassers und die endgültige Abflussrate des Trinkwassers vergleicht und die Zuflussrate des ersten gespeicherten Wassers anpasst; und
    den Zielsalzgehalt des Trinkwassers und den endgültigen Salzgehalt des Trinkwassers vergleicht und das Zuflussverhältnis des in die Entsalzungsvorrichtung 500 eingeführten zweiten gespeicherten Wassers anpasst.

12. Wasserversorgungsmanagementverfahren, das durch das Wasserversorgungsmanagementsystem gemäß einem der vorhergehenden Ansprüche implementiert ist, **dadurch gekennzeichnet, dass** das Wasserversorgungsmanagementverfahren Folgendes umfasst:

    einen Schritt des Erlangens eines aktuellen Wasserstandes einer Wasserversorgungsquelle durch die Steuerung (600) und des Bestimmens einer Trockenheitssituation, einer normalen Situation und einer Hochwassersituation basierend auf dem aktuellen Wasserstand der Wasserversorgungsquelle (S10);

einen Schritt des Einstellens einer Zuflussrate von Frischwasser (20) aus der Wasserversorgungsquelle und einer Zuflussrate von erstem gespeichertem Wasser aus dem ersten Wasserspeichertank (100) durch die Steuerung (600) und des Einführens des Frischwassers (20) und des ersten gespeicherten Wassers in den zweiten Wasserspeichertank (200), wenn die Steuerung (600) die Trockenheitssituation bestimmt;

einen Schritt des Schließens des Regenwasserzuflussrohrs (33), des Zuflussrohrs für erstes gespeichertes Wasser (40), der Meerwasserzuflussrohre (60, 62) und des Abflussrohrs für erstes gespeichertes Wasser (50) durch die Steuerung (600), wenn die Steuerung (600) die normale Situation bestimmt (S110); und

einen Schritt des Öffnens des Regenwasserzuflussrohrs (33) durch die Steuerung (600), wenn die Steuerung (600) die Hochwassersituation bestimmt, und des Öffnens des Abflussrohrs (50) für erstes gespeichertes Wasser, wenn ein Wasserstand des ersten gespeicherten Wassers in dem ersten Wasserspeichertank (100) höher oder gleich einem voreingestellten Wert (S210) ist.

13. Wasserversorgungsmanagementverfahren gemäß Anspruch 12, **dadurch gekennzeichnet, dass** der Schritt des Einführens des Frischwassers (20) und des ersten gespeicherten Wassers in den zweiten Wasserspeichertank (200) Folgendes beinhaltet:

einen Schritt des Einstellens einer Zielabflussrate von Trinkwasser und eines Zielsalzgehalts des Trinkwassers (S20) durch die Steuerung (600);

ein Schritt des Öffnens des Zuflussrohrs für erstes gespeichertes Wasser (40) durch die Steuerung (600), um das erste gespeicherte Wasser in dem ersten Wasserspeichertank (100) in den zweiten Wasserspeichertank (200) einzuführen und eine Zuflussrate des ersten gespeicherten Wassers und des Bestimmens einer Zuflussrate des Frischwassers (20) basierend auf dem aktuellen Wasserstand der Wasserversorgungsquelle (S30);

einen Schritt des Berechnens eines Salzgehalts des in dem zweiten Wasserspeichertank (200) gespeicherten zweiten gespeicherten Wassers (S40) durch die Steuerung (600);

einen Schritt des Bestimmens eines Zuflussverhältnisses des in die Entsalzungsvorrichtung (500) eingeführten zweiten gespeicherten Wassers zu dem einem Vorbehandlungsprozess in der Vorbehandlungsvorrichtung (400) unterzogenen zweiten gespeicherten Wasser durch die Steuerung (600) durch erste Berechnung (S50);

einen Schritt des Wiedergebens der Entsalzungsleistung der Entsalzungsvorrichtung (500) durch die Steuerung (600) und des Bestimmens einer Abflussrate und eines Salzgehalts des von der Entsalzungsvorrichtung (500) freigesetzten erzeugten Wassers durch zweite Berechnung (S60);

einen Schritt des Bestimmens einer endgültigen Abflussrate und eines endgültigen Salzgehalts des von der Wasseraufbereitungsvorrichtung (300) freigesetzten Trinkwassers durch die Steuerung (600) durch dritte Berechnung (S70);

einen Schritt des Vergleichens der Zielabflussrate des Trinkwassers und der endgültigen Abflussrate des Trinkwassers durch die Steuerung (600) und des Einstellens der Zuflussrate des ersten gespeicherten Wassers (S80); und

einen Schritt des Vergleichens des Zielsalzgehalts des Trinkwassers und des endgültigen Salzgehalts des Trinkwassers durch die Steuerung (600) und des Einstellens des Zuflussverhältnisses des in die Entsalzungsvorrichtung (500) eingeführten zweiten gespeicherten Wassers (S90).

14. Wasserversorgungsmanagementverfahren gemäß Anspruch 13, **dadurch gekennzeichnet, dass**:

in dem Schritt des Vergleichens der Zielabflussrate des Trinkwassers und der endgültigen Abflussrate des Trinkwassers durch die Steuerung (600) und des Einstellens der Zuflussrate des ersten gespeicherten Wassers (S80) die Steuerung (600) die Zuflussrate des ersten gespeicherten Wassers aus dem ersten Wasserspeichertank (100) verringert, wenn die endgültige Abflussrate des Trinkwassers höher ist als die Zielabflussrate des Trinkwassers, und dass die Steuerung (600) die Zuflussrate des ersten gespeicherten Wassers aus dem ersten Wasserspeichertank (100) erhöht, wenn die endgültige Abflussrate des Trinkwassers niedriger ist als die Zielabflussrate des Trinkwassers; und

in dem Schritt des Vergleichens des Zielsalzgehalts des Trinkwassers und des endgültigen Salzgehalts des Trinkwassers durch die Steuerung (600) und des Einstellens des Zuflussverhältnisses des in die Entsalzungsvorrichtung (500) eingeführten zweiten gespeicherten Wassers (S90) die Steuerung (600) bestimmt, dass die endgültige Abflussrate des Trinkwassers innerhalb eines festgelegten Zielbereichs liegt, verglichen mit der Zielabflussrate des Trinkwassers, wonach die Steuerung (600) das Zuflussverhältnis des in die Entsalzungsvorrichtung (500) eingeführten zweiten gespeicherten Wassers weiter erhöht, wenn der endgültige Salzgehalt des Trinkwassers viel höher als der Zielsalzgehalt des Trinkwassers ist, und die Steuerung (600) das Zuflussverhältnis des in die Entsalzungsvorrichtung (500) eingeführten zweiten gespeicherten Wassers verringert, wenn der endgültige Salzgehalt des Trinkwassers viel niedriger als der Zielsalzgehalt des Trinkwassers ist.

15. Computerlesbares Aufzeichnungsmedium, umfassend Anweisungen, die, wenn sie von einem Computer ausgeführt werden, den Computer veranlassen, das Wasserversorgungsverwaltungsverfahren gemäß Anspruch 12 durchzuführen.

**Revendications**

1. Système de gestion de l'alimentation en eau (1000) comprenant un premier réservoir de stockage d'eau (100), un deuxième réservoir de stockage d'eau (200), un dispositif de traitement d'eau (300), un contrôleur (600) configuré pour contrôler l'ouverture ou la fermeture des tuyaux d'arrivée et des tuyaux de drainage raccordés au premier réservoir de stockage d'eau (100), au deuxième réservoir de stockage d'eau (200) et au dispositif de traitement d'eau (300);
dans lequel le premier réservoir de stockage d'eau (100) stocke la première eau stockée; dans lequel au moins une parmi l'eau de pluie (30) et l'eau de mer (10) débordant en cas d'inondation est introduite dans le premier réservoir de stockage d'eau (100) pour former la première eau stockée;
dans lequel le deuxième réservoir de stockage d'eau (200) stocke la deuxième eau stockée, et dans lequel le contrôleur (600) commande les débits d'entrée et de sortie de l'eau de pluie (30), de l'eau de mer (10), de l'eau douce (20), de la première eau stockée, la deuxième eau stockée et l'eau potable; **caractérisé en ce que**:

au moins une de l'eau douce (20) dans une source d'alimentation en eau et de la première eau stockée dans le premier réservoir de stockage d'eau (100) est introduite dans le deuxième réservoir de stockage d'eau (200) pour former la deuxième eau stockée; et
le dispositif de traitement d'eau (300) purifie la deuxième eau stockée libérée du deuxième réservoir de stockage d'eau (200) et libère l'eau potable.

2. Système de gestion de l'alimentation en eau (1000) selon la revendication 1, **caractérisé en ce que** le premier réservoir de stockage d'eau (100) comprend:

un tuyau d'arrivée d'eau de pluie (33) à travers lequel l'eau de pluie (30) est introduite dans le premier réservoir de stockage (100);
un premier tuyau d'arrivée d'eau stockée (40) à travers lequel la première eau stockée est introduite dans le deuxième réservoir de stockage d'eau (200);
des tuyaux d'arrivée d'eau de mer (60, 62) à travers lesquels l'eau de mer (10) est introduite dans le premier réservoir de stockage d'eau (100); et
un premier tuyau d'évacuation d'eau stockée (50) à travers lequel la première eau stockée est rejetée dans la mer.

3. Système de gestion de l'alimentation en eau (1000) selon la revendication 2, **caractérisé en ce que**:

le contrôleur (600) commande des vannes (32, 42, 61, 51) disposées dans le tuyau d'arrivée d'eau de pluie (33), le premier tuyau d'arrivée d'eau stockée (40), les tuyaux d'arrivée d'eau de mer (60, 62) et le premier tuyau de vidange d'eau (50), respectivement; et
le contrôleur (600) commande des pompes (41, 52) disposées respectivement sur le premier tuyau d'arrivée d'eau stockée (40) et sur le premier tuyau d'évacuation d'eau stockée (50).

4. Système de gestion de l'alimentation en eau (1000) selon la revendication 3, **caractérisé en ce que**:

le contrôleur (600) détermine une situation normale, une situation de sécheresse ou une situation d'inondation, sur la base d'un niveau d'eau de la source d'alimentation en eau;
dans la situation normale, le contrôleur (600) ferme le tuyau d'arrivée d'eau de pluie (33), le premier tuyau d'arrivée d'eau stockée (40), les tuyaux d'entrée d'eau de mer (60, 62) et le premier tuyau d'évacuation d'eau stockée (50);
dans la situation de sécheresse, le contrôleur (600) ouvre les tuyaux d'arrivée d'eau de mer (60, 62) et le premier tuyau d'arrivée d'eau stockée (40) et ferme le premier tuyau d'évacuation d'eau stockée (50); et
dans la situation d'inondation, le contrôleur (600) ouvre le tuyau d'arrivée d'eau de pluie (33), et le contrôleur (600) ouvre le premier tuyau de vidange d'eau stockée (50) lorsqu'un niveau d'eau de la première eau stockée dans le premier stockage d'eau réservoir (100) est supérieur ou égal à une valeur prédéfinie.

5. Système de gestion de l'alimentation en eau (1000) selon la revendication 4, **caractérisé en ce que**:

un dispositif d'élimination de matières étrangères (70) est disposé dans les tuyaux d'arrivée d'eau de mer (60, 62) pour éliminer les matières étrangères contenues dans l'eau de mer (10); et
la matière étrangère retirée est évacuée vers la mer par le premier tuyau de vidange d'eau stockée (50).

6. Système de gestion de l'alimentation en eau (1000) selon la revendication 5, **caractérisé en ce que** le dispositif d'élimination de matières étrangères (70) comprend:

un boîtier (70a) comprenant une entrée d'eau de mer (70b), une sortie d'eau de mer (70c) et une sortie de corps étrangers (70d);
des lames (71, 74) configurées pour agiter et briser des corps étrangers dans l'eau de mer (10) introduite depuis la mer;
un tamis à mailles (72) configuré pour filtrer les matières étrangères flottant dans le boîtier (70a); et
des grattoirs (73, 76) configurés pour racler les matières étrangères du tamis à mailles (72) et d'une paroi latérale du boîtier (70a).

7. Système de gestion de l'alimentation en eau (1000) selon la revendication 4, **caractérisé en ce que** le dispositif de traitement d'eau (300) comprend:

un dispositif de prétraitement (400) comprenant un moyen de coagulation (420), un moyen de sédimentation (430) et un moyen de filtration (440), le dispositif de prétraitement (400) étant configuré pour contrôler la qualité de l'eau de la deuxième eau stockée ; et
un dispositif de dessalement (500) disposé en aval du dispositif de prétraitement (400), le dispositif de dessalement (500) étant configuré pour éliminer la matière dissoute contenant du sel d'une partie de la deuxième eau stockée et libérer l'eau produite.

8. Système de gestion de l'alimentation en eau (1000) selon la revendication 7, **caractérisé en ce que** le dispositif de prétraitement (400) comprend en outre un moyen de traitement à l'ozone (460) et un moyen de traitement au charbon actif (470).

9. Système de gestion de l'alimentation en eau (1000) selon la revendication 8, **caractérisé en ce que** le dispositif de dessalement (500) comprend un moyen de nanofiltration (510) et un moyen d'osmose inverse (520).

10. Système de gestion de l'alimentation en eau (1000) selon la revendication 9, **caractérisé en ce que**:

le dispositif de dessalement (500) peut être combiné avec ou détachable du dispositif de prétraitement (400);
le contrôleur (600) combine le dispositif de dessalement (500) avec le dispositif de prétraitement (400) en situation de sécheresse; et
le contrôleur (600) détache le dispositif de dessalement (500) du dispositif de prétraitement (400) dans la situation normale.

11. Système de gestion de l'alimentation en eau (1000) selon la revendication 10, **caractérisé en ce que** le contrôleur (600):

détermine la situation de sécheresse lorsqu'un niveau d'eau actuel A de la source d'alimentation en eau est inférieur à un premier niveau d'eau B; fixe un débit de sortie cible de l'eau potable et une salinité cible de l'eau potable;
ouvre le premier tuyau d'arrivée d'eau stockée (40) pour introduire la première eau stockée dans le premier réservoir de stockage d'eau (100) dans le deuxième réservoir de stockage d'eau (200), et détermine un débit d'entrée de la première eau stockée et un débit d'entrée de l'eau douce (20) sur la base du niveau d'eau actuel A de la source d'alimentation en eau;
mesure les salinités de l'eau douce (20) et de la première eau stockée et calcule une salinité de la deuxième eau stockée qui est stockée dans le deuxième réservoir de stockage d'eau (200);
détermine un rapport d'entrée de la deuxième eau stockée introduite dans le dispositif de dessalement (500) sur la deuxième eau stockée soumise à un processus de prétraitement dans le dispositif de prétraitement (400), par le biais d'un premier calcul;

reflète les performances de dessalement du dispositif de dessalement (500) et détermine un débit de sortie et une salinité de l'eau produite libérée par le dispositif de dessalement (500), par le biais d'un deuxième calcul;

détermine un débit de sortie final et une salinité finale de l'eau potable libérée du dispositif de traitement d'eau (300), par le biais d'un troisième calcul;

compare le débit de sortie cible de l'eau potable et le débit de sortie final de l'eau potable et ajuste le débit d'entrée de la première eau stockée; et

compare la salinité cible de l'eau potable et la salinité finale de l'eau potable et ajuste le rapport d'entrée de la deuxième eau stockée introduite dans le dispositif de dessalement (500).

12. Procédé de gestion de l'alimentation en eau mis en œuvre par le système de gestion de l'alimentation en eau selon une des revendications précédentes, **caractérisé en ce que** le procédé de gestion de l'alimentation en eau comprend:

une étape d'obtention, par le contrôleur (600), d'un niveau d'eau actuel d'une source d'alimentation en eau et de détermination d'une situation de sécheresse, d'une situation normale et d'une situation d'inondation sur la base du niveau d'eau actuel de la source d'alimentation en eau (S10) ;

une étape d'ajustement, par le contrôleur (600), d'un débit d'entrée d'eau douce (20) de la source d'alimentation en eau et d'un débit d'entrée de la première eau stockée du premier réservoir de stockage d'eau (100) et d'introduction de l'eau douce (20) et la première eau stockée dans le deuxième réservoir de stockage d'eau (200), lorsque le contrôleur (600) détermine la situation de sécheresse;

une étape de fermeture, par le contrôleur (600), du tuyau d'entrée d'eau de pluie (33), du premier tuyau d'entrée d'eau stockée (40), des tuyaux d'entrée d'eau de mer (60, 62) et du premier tuyau d'évacuation d'eau stocké (50), lorsque le contrôleur (600) détermine la situation normale (S110); et

une étape d'ouverture, par le contrôleur (600), du tuyau d'arrivée d'eau de pluie (33) lorsque le contrôleur (600) détermine la situation d'inondation, et d'ouverture du premier tuyau de vidange d'eau stockée (50) lorsqu'un niveau d'eau de la première eau stockée dans le premier réservoir de stockage d'eau (100) est supérieure ou égale à une valeur prédéfinie(S210).

13. Procédé de gestion de l'alimentation en eau selon la revendication 12, **caractérisé en ce que** l'étape d'introduction de l'eau douce (20) et de la première eau stockée dans le deuxième réservoir de stockage d'eau (200) comprend:

une étape de définition, par le contrôleur (600), d'un débit de sortie cible d'eau potable et d'une salinité cible de l'eau potable (S20);

une étape d'ouverture, par le contrôleur (600), du premier tuyau d'arrivée d'eau stockée (40) pour introduire la première eau stockée dans le premier réservoir de stockage d'eau (100) dans le deuxième réservoir de stockage d'eau (200) et de détermination d'un débit d'entrée de la première eau stockée et d'un débit d'entrée de l'eau douce (20) sur la base du niveau d'eau actuel de la source d'alimentation en eau (S30);

une étape de calcul, par le contrôleur (600), d'une salinité de la deuxième eau stockée qui est stockée dans le deuxième réservoir de stockage d'eau (200) (S40);

une étape de détermination, par le contrôleur (600), d'un rapport d'entrée de la deuxième eau stockée introduite dans le dispositif de dessalement (500) sur la deuxième eau stockée soumise à un processus de prétraitement dans le dispositif de prétraitement (400), par le premier calcul (S50);

une étape de réflexion, par le contrôleur (600), des performances de dessalement du dispositif de dessalement (500) et de détermination d'un débit de sortie et une salinité de l'eau produite libérée du dispositif de dessalement (500), par le biais d'un deuxième calcul (S60);

une étape de détermination, par le contrôleur (600), d'un débit de sortie final et d'une salinité finale de l'eau potable libérée du dispositif de traitement d'eau (300), par le biais d'un troisième calcul (S70);

une étape de comparaison, par le contrôleur (600), du débit de sortie cible de l'eau potable et du débit de sortie final de l'eau potable et d'ajustement du débit d'entrée de la première eau stockée (S80); et

une étape de comparaison, par le contrôleur (600), de la salinité cible de l'eau potable et de la salinité finale de l'eau potable et d'ajustement du rapport d'entrée de la deuxième eau stockée introduite dans le dispositif de dessalement (500) (S90).

14. Procédé de gestion de l'alimentation en eau selon la revendication 13, **caractérisé en ce que**:

à l'étape de comparaison, par le contrôleur (600), du débit de sortie cible de l'eau potable et du débit de sortie final de l'eau potable et d'ajustement du débit d'entrée de la première eau stockée (S80), le contrôleur (600) diminue le débit d'entrée de la première eau stockée depuis le premier réservoir de stockage d'eau (100) lorsque le débit de sortie final de l'eau potable est supérieur au débit de sortie cible de l'eau potable, et le contrôleur (600) augmente le débit d'entrée d'une première eau stockée du premier réservoir de stockage d'eau (100) lorsque le débit de sortie final de l'eau potable est inférieur au débit de sortie cible de l'eau potable; et

à l'étape de comparaison, par le contrôleur (600), de la salinité cible de l'eau potable et de la salinité finale de l'eau potable et d'ajustement du rapport d'entrée de la deuxième eau stockée introduite dans le dispositif de dessalement (500) (S90), le contrôleur (600) détermine que le débit de sortie final de l'eau potable est dans une plage cible définie, par rapport au débit de sortie cible de l'eau potable, après quoi le contrôleur (600) augmente encore le taux d'entrée de la deuxième eau stockée introduite dans le dispositif de dessalement (500) lorsque la salinité finale de l'eau potable est beaucoup plus élevée que la salinité cible de l'eau potable et que le contrôleur (600) diminue le taux d'entrée de la deuxième eau stockée introduite dans le dispositif de dessalement (500) lorsque la salinité finale de l'eau potable est bien inférieure à la salinité cible de l'eau potable.

15. Support d'enregistrement lisible par ordinateur comprenant des instructions qui, lorsqu'elles sont exécutées par un ordinateur, amènent l'ordinateur à exécuter le procédé de gestion de l'alimentation en eau selon la revendication 12.

# FIG. 1

EP 3 587 678 B1

# FIG. 2

FIG. 3

EP 3 587 678 B1

FIG. 4

# FIG. 5

START

Input
Operating conditions: $Q_p$, $Y$, $C_{b,initial}$, $T$
Membrane number: $N_{PV}$, $N_{element}$
Membrane property: $A$, $B$, geometry
Pump efficiency: $n_{HP}$, $n_{BP}$, $n_{motor}$, $n_{ERD}$

$i=1$
Determination: $P_i$

$|Q_{p,sys} - Q_p| < \varepsilon$

END

$i = i+1$

$Q_{p,i}$, $C_{b,i}$, $C_{p,i,initial}$

Salt property: $D_{s,i}$, $\pi_{b,i}$, $\pi_{p,i}$
Water property: $\rho_i$, $\mu_i$, $v_i$, $Re_i$, $Sc_i$, $k_i$

Solver: $J_{w,i}$, $CPF_i$

$|C_{p,i,initial} - C_{p,i,new}| < \varepsilon$

$Q_{p,i}$, $Y_i$, $P_{d,i}$, $Q_{b,i+1}$, $C_{b,i+1}$, $P_{i+1}$

$i = N_{element}$

EP 3 587 678 B1

# FIG. 6A

START

S10 DROUGHT SITUATION? — N →

S100 NORMAL SITUATION? — N →

S200 FLOOD SITUATION? — N →

**Y** (from S10)

S20: SET TARGET OUTFLOW RATE AND TARGET SALINITY OF POTABLE WATER

S30: DETERMINE INFLOW RATE OF FIRST STORED WATER AND INFLOW RATE OF FRESHWATER

S40: CALCULATE SALINITY OF SECOND STORED WATER

S50: CALCULATE INFLOW RATIO OF SECOND STORED WATER STORED IN SECOND WATER STORAGE TANK

(A)

**Y** (from S100)

S110: CLOSE RAINWATER INFLOW PIPE, FIRST STORED WATER INFLOW PIPE, SEAWATER INFLOW PIPE, AND FIRST STORED WATER DRAIN PIPE

(B)

**Y** (from S200)

S210: OPEN RAINWATER INFLOW PIPE, AND OPEN FIRST STORED WATER DRAIN PIPE WHEN WATER LEVEL OF FIRST STORED WATER IN FIRST WATER STORAGE TANK IS HIGHER THAN OR EQUAL TO PRESET VALUE

(C)

EP 3 587 678 B1

FIG. 6B

EP 3 587 678 B1

## REFERENCES CITED IN THE DESCRIPTION

**Patent documents cited in the description**

- FR 2912161 A1